# DEMANDE DE BREVET EUROPEEN

(11) **EP 1 197 359 A1**
(43) Date de publication de la demande: **17.04.2002**
(21) Numéro de dépôt: 01402636.3
(22) Date de dépôt: 11.10.2001
(51) Int. Cl.: B60G 9/00, B60G 7/00, B60T 1/06

(54) **Ensemble de bras de suspension et support de frein**

(30) Priorité: 13.10.2000 FR 0013171
(71) Demandeur: General Trailers France, 91130 Ris Orangis (FR)
(72) Inventeur: Vanryckeghem, Charles, 10130 Racines (FR)
(74) Mandataire: Michelet, Alain

(57) **Abrégé**

La présente invention concerne un ensemble de bras de suspension (1) et support de frein (2) montés sur un essieu (3) d'un véhicule industriel.

Le support de frein (2) est solidaire du bras de suspension (1).

## Description

La présente invention concerne un ensemble de bras de suspension et support de frein montés sur un essieu d'un véhicule industriel.

L'invention concerne plus particulièrement un ensemble formé par un bras de suspension et un support de frein d'un frein à disque.

Selon une technique couramment utilisée dans la conception de véhicules industriels, un essieu est monté sur deux bras de suspension, chacun des bras de suspension étant monté pivotant, par une de ses deux extrémités, sur un élément de support monté sur un longeron du châssis de véhicule. L'autre extrémité de chacun des bras de suspension est relié au longeron par l'intermédiaire d'un ressort pneumatique.

L'essieu qui a la forme d'un tube cylindrique de révolution, est positionné sur les bras de suspension par deux berceaux, chacun des berceaux étant fixé sur le bras de suspension correspondant au moyen d'une bride ayant par exemple la forme d'un U et des éléments d'assemblage attachés solidairement à l'essieu. Les éléments d'assemblage peuvent être constitués, pour le moins en partie, de plaques fixées sur l'essieu par une soudure.

La différence entre les mouvements de chacun des bras de suspension d'un véhicule en marche engendre des efforts de torsion assez importants agissant sur l'essieu.

De même, selon cette technique courante, les supports de frein disposés aux extrémités de l'essieu sont fixés sur le corps d'essieu. Chaque opération de freinage engendre un couple transmis par le support de frein sur le corps d'essieu et du corps d'essieu, par la liaison essieu / bras de suspension, aux bras de suspension.

En conséquence, cette technique courante de conception des véhicules industriels fait subir au corps d'essieu et notamment aux soudures par lesquelles les différents éléments sont fixés sur le corps d'essieu, des contraintes assez importantes lors des opérations de freinage et de roulage.

Par ailleurs, il est bien connu que tout assemblage de deux éléments par une soudure altère la tenue du matériau de ces pièces malgré toute précaution que l'on puisse prendre. En effet, la réalisation d'une soudure dans des pièces sollicitées diminue la tenue à la fatigue, car le soudage crée une zone affectée thermiquement, zone dans laquelle les caractéristiques mécaniques du matériau sont altérées.

Le but de l'invention est de proposer un montage des supports de frein d'un frein à disque sur un essieu d'un véhicule industriel permettant de réduire les contraintes subies par le corps d'essieu lors des opérations de freinage et de roulage.

Le but de l'invention est atteint par un ensemble de bras de suspension et support de frein d'un frein à disque montés sur un essieu d'un véhicule industriel, dans lequel le support de frein est disposé sur un bord longitudinal du bras de suspension et solidaire de celui-ci.

Le support de frein peut être disposé indifféremment sur un bord longitudinal supérieur, ou une face supérieure, du bras de suspension ou sur un bord longitudinal latéral, ou une face latérale, du bras de suspension.

Grâce à cette disposition de l'invention, le support de frein est exempt de liaison directe avec l'essieu.

Cette nouvelle conception selon l'invention réduit les contraintes subies par le corps d'essieu lors des opérations de freinage du fait que le couple transmis par l'étrier de frein sur le support de frein est transmis directement aux bras de suspension sans solliciter la liaison essieu / bras de suspension.

Il en résulte une meilleure tenue à l'usage du corps d'essieu qui est encore améliorée du fait de la réduction des soudures sur le corps d'essieu.

Par ailleurs, l'ensemble de bras de suspension et support de frein selon l'invention permet un assemblage plus rapide, car l'opération de montage de la suspension permet de fixer en même temps l'étrier de frein sur le support de frein, et une réduction des coûts de production liée à la réduction du nombre de composants et du temps de montage.

L'invention concerne également les caractéristiques ci-après, considérées isolément ou selon toutes leurs combinaisons techniquement possibles :
- le bras de suspension et le support de frein sont constitués par une pièce unique ;
- le bras de suspension et le support de frein sont constitués par une pièce unique en fonte ;
- le bras de suspension et le support de frein sont constitués par une pièce unique en fonte d'aluminium ;
- le bras de suspension et le support de frein sont constitués par une pièce unique obtenue par mécano-soudage ; l'assemblage de l'ensemble bras de suspension et support de frein par soudage et/ou assemblage mécanique n'est pas contraire au principe de la présente invention, car celle-ci a pour but d'éviter une fixation directe ou un contact direct entre le support de frein et le corps d'essieu ;
- le bras de suspension et le support de frein sont constitués par une pièce unique usinée en acier ;
- le bras de suspension et le support de frein sont formés par une pièce unique réalisée au moins partiellement en un matériau composite.

D'autres caractéristiques et avantages de l'invention ressortiront de la description d'un exemple de réalisation faite ci-après en référence aux dessins annexés dans lesquels :
- la figure 1 représente le schéma d'un ensemble de bras de suspension et support de frein selon l'invention ;
- la figure 2 représente un exemple de réalisation d'un bras de suspension et d'un support de frein sous la forme d'une pièce unique.

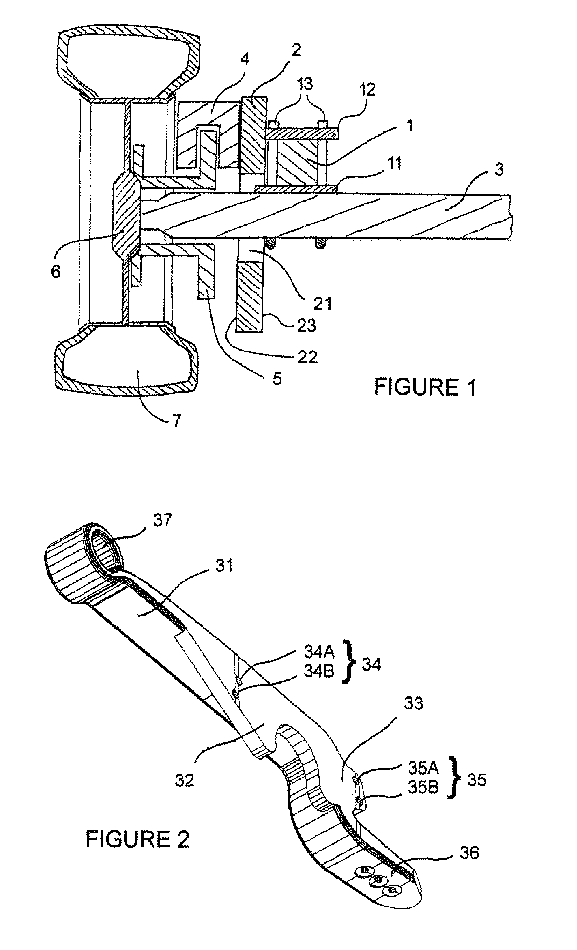

La figure 1 représente le schéma de montage selon lequel le support de frein, selon l'invention, est intégré dans le bras de suspension.

Un bras de suspension 1 est monté sur un corps d'essieu 3 proche de l'une de ses deux extrémités au moyen d'un berceau 11 soudé sur le corps d'essieu 3, d'une plaque 12 et de deux brides 13 en forme d'un U.

Un étrier de frein 4 pourvu de plaquettes de frein agissant sur un disque de frein 5 de la roue correspondante, représentée par son moyeu de jante 6 et le pneumatique 7, est monté sur un support de frein 2 qui est disposé sur un bord longitudinal du bras de suspension 1 et solidaire de celui-ci.

Le support de frein 2 est constitué par une platine percée ou perforée pour recevoir des éléments de fixation de l'étrier de frein 4 sur la platine. Cette platine a deux faces opposées 22, 23 appelées faces latérales du fait de leur orientation lorsque la platine est fixée sur le bras de suspension. La face 22 est destinée à recevoir l'étrier 4 et la face23 est destinée à être solidaire du bras de suspension. Pour éviter toute liaison directe entre cette platine et le corps d'essieu, la platine est pourvue d'un évidement 21 d'un diamètre suffisamment grand pour y passer le corps d'essieu 3 et notamment pour éviter un contact direct entre le support de frein et le corps d'essieu 3.

Selon un mode de réalisation préféré de l'invention, représenté sur la figure 2, le bras de suspension 1 et le support de frein 2 sont constitués par une pièce unique en fonte. Avantageusement, on utilise de la fonte d'aluminium.

Toutefois, sans sortir du principe de la présente invention, la pièce unique formant ensemble le bras de suspension et le support de frein peut également être réalisée en acier par usinage ou mécano-soudage.

Selon un autre mode de réalisation, le bras de suspension et le support de frein sont formés par une pièce unique réalisée en un matériau composite.

La pièce unique représentée sur la figure 2 diffère de celle représentée sur la figure 1 du fait que le support de frein est formé de façon qu'il n'est pas pénétré par le corps d'essieu et qu'il n'a donc pas besoin d'une ouverture suffisamment grande pour éviter un contact direct entre le support de frein et le corps d'essieu 3.

En effet, la pièce unique représentée sur la figure 2 comprend un bras de suspension 31 et un support de frein 32, 33. Chacune des deux parties 32, 33 du support de frein est pourvue de trous pour la fixation d'un étrier de frein. Selon l'exemple représenté, la partie 32 du support de frein est pourvue de deux trous 34A, 34B, référencés ensemble 34, et la partie 33 du support de frein est pourvue de deux trous 35A, 35B, référencés ensemble 35.

Le support de frein 32, 33 est formé de façon à ce qu'il enjambe le corps d'essieu 3 lorsque ce dernier est mis en place. Les deux extrémités 36, 37 de la pièce unique permettent de monter celle-ci sur un châssis, l'extrémité 36 étant alors montée sur une première extrémité d'un ressort pneumatique dont la seconde extrémité est fixée sur le châssis, et l'extrémité 37 est montée pivotante au châssis.

Lorsque la pièce unique constituant le bras de suspension et le support de frein est réalisée en un matériau composite, on choisira de préférence la forme de la pièce représentée sur la figure 2 puisque cette pièce est plus facile à réaliser que celle représentée sur la figure 1, du fait de l'absence d'un évidement de passage pour le corps d'essieu.

Les signes de référence insérés après les caractéristiques techniques mentionnées dans les revendications ont pour seul but de faciliter la compréhension de ces dernières et n'en limitent aucunement la portée.

## Revendications

1. Ensemble de bras de suspension (1) et support de frein (2) d'un frein à disque montés sur un essieu (3) d'un véhicule industriel,
**caractérisé en ce que** le support de frein (2) est disposé sur un bord longitudinal du bras de suspension (1) et solidaire du bras de suspension (1).

2. Ensemble selon la revendication 1, **caractérisé en ce que** le support de frein (2) est exempt de liaison avec l'essieu (3).

3. Ensemble selon la revendication 1 ou 2, **caractérisé en ce que** le bras de suspension (1) et le support de frein (2) sont constitués par une pièce unique.

4. Ensemble selon l'une quelconque des revendications 1 à 3, **caractérisé en ce que** le bras de suspension (1) et le support de frein (2) sont constitués par une pièce unique en fonte.

5. Ensemble selon la revendication 4, **caractérisé en ce que** le bras de suspension (1) et le support de frein (2) sont constitués par une pièce unique en fonte d'aluminium.

6. Ensemble selon l'une quelconque des revendications 1 à 3, **caractérisé en ce que** le bras de suspension (1) et le support de frein (2) sont formés par une pièce unique réalisée au moins partiellement en un matériau composite.
